# EUROPEAN PATENT APPLICATION

(11) **EP 1 083 009 A2**
(43) Date of publication of application: **14.03.2001**
(21) Application number: 00304139.9
(22) Date of filing: 17.05.2000
(51) Int. Cl.: B09C 1/00, B09C 1/02

(54) **Soil decontamination**

(30) Priority: 10.09.1999 GB 9921310
(71) Applicant: PJH Partnership Limited, York, North Yorkshire YO62 4LW (GB)
(72) Inventor: Hammond, Peter James, York, North Yorkshire YO62 4LW (GB)
(74) Representative: Pidgeon, Robert John

(57) **Abstract**

A soil decontamination apparatus comprises a vessel (2) having one open face (16), the vessel thereby defining a cavity, the vessel being arranged in use to be inserted into the ground such that the open face (16) is lowermost, thereby filling the cavity with soil, the vessel (2) including means (22,26) for providing the ingress and egress of a decontaminating fluid through the cavity once the cavity is charged with soil. The vessel (2) may also comprise means for sealing the open face (16) of the vessel in use, by forming a physical barrier of frozen material, using a sealing fluid such as liquid nitrogen, liquid carbon dioxide or gaseous carbon dioxide. The vessel overcomes the need for excavations of contaminated soil or expensive or environmentally harmful methods of in situ decontamination.

## Description

This invention relates to a soil decontamination apparatus, in particular to apparatus for decontaminating soil in situ.

In many countries, land contaminated by industrial waste is a major concern. In particular, land contaminated by petroleum industry waste products, radioactive waste materials, and explosive waste materials creates an environmental hazard. Such land may be unusable for a long period of time.

Current attempts to clean up such contaminated land usually involve excavating soil from the land and transferring it to decontamination vessels. A variety of solvents are then recycled through the vessels to dissolve or degrade the contaminants within the soil, and after cleaning, the soil is returned to the land. The removal of soil is time-consuming and involves extra manpower and resources, especially if large volumes of soil are to be decontaminated.

Other alternative ways of decontaminating land which have been used include injecting steam directly into the soil to liberate pollutants from the soil matrix, followed by injection of air to oxidise the released pollutants and render them less harmful.

However, the use of steam and air is rarely fully effective as it can take long periods of time for the release of pollutants and subsequent oxidation. Various strains of bacteria have also been added to contaminated soil to degrade or metabolise certain pollutants, especially organic hydrocarbons from the petroleum industry. The use of bacteria has a similar problem in that it can take long periods of time for the bacteria multiply to sufficient numbers and become effective in breaking down the pollutants. Also many pollutants are not metabolisable by known bacteria, so only certain, mainly organic, pollutants can be removed in this way.

It is therefore an object of preferred embodiments of the present invention to overcome or mitigate at least some of the abovementioned problems.

According to the present invention there is provided an in situ soil decontamination apparatus comprising a vessel having an open face, the vessel thereby defining a cavity, the vessel being arranged in use to be inserted into the ground such that the open face is lowermost, thereby filling the cavity with soil, the vessel including means for providing the ingress of a decontaminating fluid into the cavity and for the egress of used decontaminating fluid from the cavity, once the vessel is charged with soil, in use.

Suitably the vessel comprises an open box structure, comprising a boundary wall and, preferably, an end wall. The boundary wall may comprise a plurality of walls. The walls may be integral with or secured to each other, thereby forming a continuous barrier, and may be integral with or secured to the end wall.

Alternatively the vessel may comprise a continuous boundary wall forming a hollow cylinder, preferably, having an end wall at one end thereof. The end wall may be integral with or secured to the cylindrical boundary wall.

The vessel is suitably of the same cross section throughout the height of the boundary wall; neither tapering or widening.

Preferably the end wall is removably attached to the boundary wall.

The vessel is constructed such that it can withstand large pressures exerted on it from within the cavity of the vessel.

Suitably the vessel is of dimensions such that when the vessel is inserted into the ground, the cavity of the vessel is filled with soil to a depth of not less than 0.3 metres, preferably not less than 0.5 metres; and preferably to a depth of not more than 2 metres, more preferably not more than 1 metre.

The boundary wall may comprise, adjacent to the open face, a conformation to facilitate insertion of the vessel into the ground. For example its free edge may have a tapered, stepped or serrated configuration.

Preferably the vessel comprises means for sealing the open face, in use, by forming a physical barrier of frozen material.

Suitably the means for sealing the open face of the vessel using a frozen material comprises at least one sealing fluid conduit arranged to dispense a sealing fluid to the soil across the open face of the vessel.

The sealant fluid conduit may comprise an inlet for receiving fluid from a sealant fluid delivery device, and an outlet for dispensing the fluid to the soil in the region of the open face of the vessel.

The sealant fluid conduit may be located outside of the boundary wall of the vessel. Preferably, however, the sealant fluid conduit is located within the boundary wall, the outlet of the fluid conduit being in fluid communication with the soil adjacent to the open face of the vessel by way of an aperture at or near the free end of the boundary wall.

Suitably the sealing material is a cryogen, for example liquid nitrogen, or liquid oxygen. Preferably, however, the sealing material is gaseous or liquid carbon dioxide.

If a cryogen such as liquid nitrogen or liquid oxygen is used, it is believed that as the cryogen is dispensed into the soil in the region of the free end of the boundary wall of the vessel, it withdraws energy from the surrounding soil, leading to significant cooling of the soil, freezing any trapped water and other low melting point liquids present, to form a frozen barrier. As more cryogen is dispensed the barrier increases in size, eventually contacting the entire circumference of the wall of the vessel and closing the open face thereof, so that, in practice, the vessel provides a sealed cavity.

If liquid or gaseous carbon dioxide is used it is believed that a similar process occurs, but as the liquid or gaseous carbon dioxide is dispensed it begins to evaporate from the soil, thereby withdrawing energy. Again this causes significant cooling of the surrounding soil freezing any trapped water and low melting point liquids which may be present, but it is believed that the cooling effect also begins to solidify the carbon dioxide dispensed into the soil, creating a further element to the frozen barrier produced.

Therefore the use of carbon dioxide is very useful in soils with little or no trapped water, creating a barrier of primarily frozen carbon dioxide.

Such means for sealing the open face of the vessel may not be needed when the vessel is used on certain soils, for example those having an impermeable sub-soil (for example clay).

The boundary wall may be tapered, serrated, stepped or roughened on its inside, adjacent to its free edge. Such measures help the frozen barrier to gain purchase on the vessel to form a tight seal or "key".

Preferably the means for the ingress and egress of decontaminating fluid comprise at least one decontaminating fluid ingress conduit and at least one decontaminating fluid egress conduit. Preferably there are a plurality of decontaminating ingress conduits and a plurality of decontaminating fluid egress conduits.

The decontaminating fluid ingress and egress conduits are suitably in the form of pipes, located such that they provide fluid communication between the cavity defined by the vessel, and the outside of the vessel.

Suitably the or each decontaminating fluid ingress conduit is connected to decontaminating fluid dispensing means located outside the vessel. The or each decontaminating fluid egress conduit is suitably connected to decontaminating fluid recovery means located outside the vessel.

The decontaminating fluid recovery means and decontaminating fluid dispensing means may comprise separate fluid storage tanks. Alternatively they may comprise the same storage tank, such that the decontaminating fluid is circulated.

The end wall of the vessel may include an aperture therethrough, and the decontaminating fluid ingress and egress conduits may extend through the aperture to provide fluid communication between the cavity within the vessel and the outside of the vessel.

Alternatively either the decontaminating fluid ingress conduit(s) or the decontaminating fluid egress conduit(s) may extend through the end wall, and the other of the decontaminating fluid ingress conduit(s) or the decontaminating fluid egress conduit(s) are located within the boundary wall of the vessel and are in fluid communication with the cavity within the vessel by way of at least one aperture in the boundary wall.

More preferably the decontaminating fluid ingress conduit(s) and the decontaminating fluid egress conduit(s) are located within the boundary wall of the vessel, the conduits being in fluid communication with the cavity within the vessel by way of apertures in the boundary wall.

Preferably the decontaminating fluid ingress conduit(s) and the decontaminating fluid egress conduit(s) are located on opposite sides to each other within the boundary wall of the vessel such that decontaminating fluid may flow from the ingress conduit(s) into the cavity of the sealed vessel and then into the egress conduit(s) within the boundary wall on the opposite side of the cavity.

Suitably the decontaminating fluid is heated, then pumped into the cavity of the vessel. This may be achieved by providing one or more heaters and one or more pumps in the fluid storage tank(s) or by providing external heater(s) and pump(s).

The decontaminating fluid is preferably a liquid, especially water, but may be any fluid suitable for removing target pollutants from the soil. When as is preferred, it is a liquid, it preferably remains a liquid throughout the process.

Preferably the water is heated then pumped into the cavity of the sealed vessel under pressure without egress from the vessel, for a sufficient period for the water to attain a superheated state.

By superheated state we mean the water is at a temperature above 100°C but is kept in the liquid state by pressure. Advantageously the water is at a temperature and pressure suitable for dissolving target pollutants. Alternatively or additionally the water may degrade or decompose target pollutants.

Suitably the water in the sealed vessel is pressurised to at least 20 bar, preferably at least 50 bar, more preferably at least 70 bar, and most preferably at least 100 bar. With certain vessels pressures of up to 200 bar, or higher, may be employed.

Suitably the temperature of the water in the sealed vessel is at least 150°C, preferably at least 200°C, more preferably at least 250°C, and, especially, at least 270°C. In some embodiments temperatures of up to 300°C, or higher, may be employed.

In a preferred embodiment of the invention, hot water (the decontaminating fluid) is pumped from a surface tank through the decontaminating fluid ingress conduit into the cavity of the sealed vessel. The water is continuously pumped under pressure until the water in the sealed cavity is superheated to the required temperature. At this point the decontaminating fluid egress conduit is opened to allow the water and any dissolved or decomposed pollutants to flow out of the sealed cavity, to another surface tank. Water may be continually pumped into the cavity while part of it leaves the cavity, the arrangement being so as to keep the superheated water at the required pressure and temperature as the process is carried out.

Suitably the vessel comprises means for enabling the vessel to be inserted into the ground. Preferably the means for enabling the vessel to be inserted into the ground comprise attachment points arranged to cooperate with a drive means or ram means.

The vessel may comprise means for enabling removal of the vessel from the ground, which means may comprise lifting eyes arranged to cooperate with a suitable lifting device.

Suitably a drive means or ram means may be used to insert the vessel and may be operated in reverse to remove the vessel.

The vessel may be provided with at least one intermediate wall extending transversely from the end wall of the vessel into the cavity.

Suitably the intermediate wall extends substantially up to the open face of the vessel. Suitably the intermediate wall is provided with at least one sealant fluid conduit located within the intermediate wall, the sealant fluid conduit comprising an inlet for receiving sealant fluid from a sealant fluid delivery device, and an outlet, the outlet being in fluid communication with the soil adjacent to the open face of the vessel by way of an aperture at or near the distal end of the intermediate wall.

Suitably the intermediate wall divides the vessel into compartments, each compartment having an open face at one end thereof, each compartment having at least one decontaminating fluid ingress conduit and at least one decontaminating egress conduit. The decontaminating fluid ingress and egress conduits may both be formed within the intermediate wall, or both be formed within the boundary wall of the compartment. Alternatively either the decontaminating fluid ingress conduit(s) or egress conduit(s) may be formed in the intermediate wall with the other of the decontaminating fluid ingress conduit(s) or egress conduit(s) formed in the boundary wall of the compartment.

There may be more than one intermediate wall, the walls suitably being spaced apart and parallel with each other, spanning the vessel, and thus forming three or more compartments, each compartment having decontaminating fluid ingress and egress conduits to allow fluid flow through all the compartments formed in the sealed vessel.

In a second aspect of the present invention there is provided a method of decontaminating soil in situ, the method comprising the steps of providing a vessel with an open face, inserting the vessel in the ground with the open face lowermost such that the cavity within the vessel is filled with soil, pumping a decontaminating fluid into the soil in the cavity of the vessel in order to dissolve and/or decompose pollutants within the soil and out of the vessel to remove the dissolved and/or decomposed pollutants.

Preferably the decontaminating fluid is a superheated liquid, as described above.

Preferably the open face of the vessel is sealed with a barrier of frozen material, as described above.

Specific embodiments of the present invention will now be described, by way of example, with reference to the accompanying drawings, in which:
Figure 1 is a perspective view of a preferred embodiment of the present invention.
Figure 2 is a side sectional view of the preferred embodiment of Figure 1, in the direction of arrows A-A, when the apparatus is in position in the ground.
Figure 3 is a schematic side sectional view of plate 10 of Figure 2.
Figure 4 is the sectional view corresponding to that of Figure 2, when the vessel has been sealed.

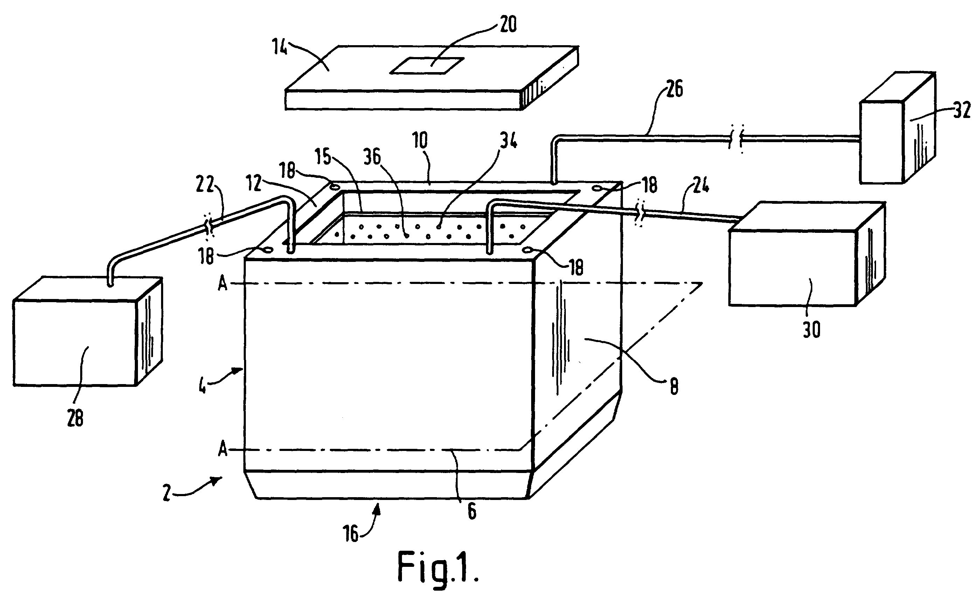

Referring firstly to Figure 1, a preferred embodiment of the present invention provides a soil cleaning apparatus for in situ decontamination of soil. The apparatus comprises a vessel 2 including boundary wall 4 which is made up of four wall plates 6, 8, 10 and 12 secured together to form an open box structure having an open top and bottom. A top plate 14 is removably attached to the boundary wall 4 by being placed on and secured to lip 15 which extends around the entire inner circumference of the boundary wall 4 near the top of the wall. Once top plate 14 has been secured to the wall 4, the vessel 2 comprises a box structure having an open face 16 at the bottom of the vessel 2.

Top plate 14 and wall plates 6, 8, 10 and 12 are provided with attachment points 20 and 18 respectively which are used to attach rams or other driving mechanisms to the vessel 2 in order to drive the vessel into the ground, and to raise it subsequently.

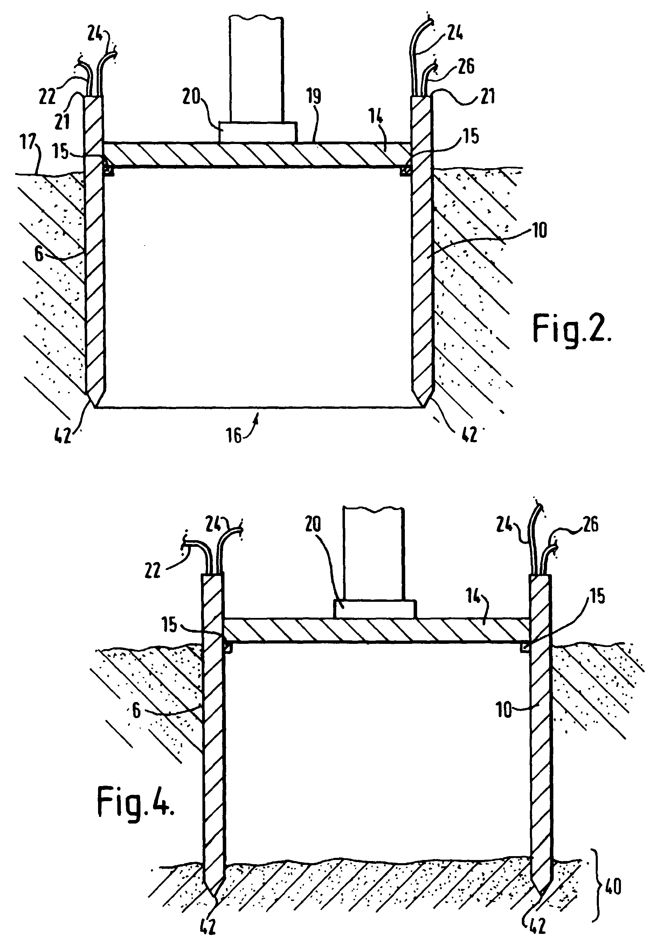

The free end of the boundary wall 2 is formed with a taper 42, as shown in Figure 2, to allow easier insertion into the soil. Instead of a taper the edge may be serrated or stepped to achieve the same result.

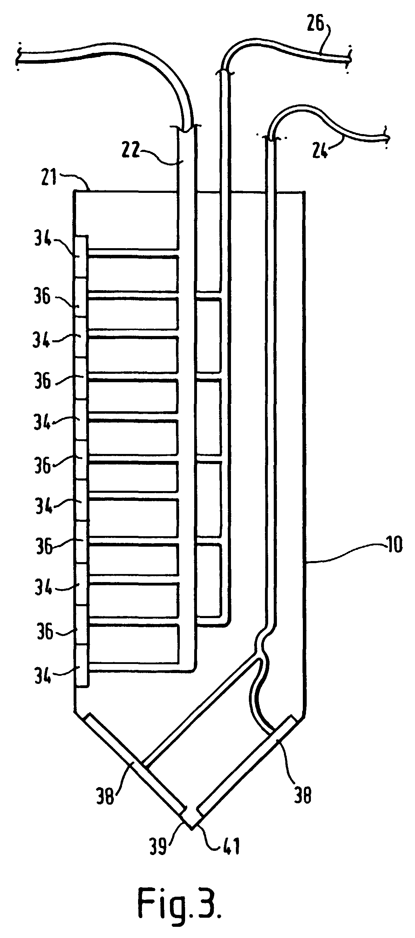

Each wall plate 6, 8, 10 and 12 of the vessel 2 has a series of fluid flow pathways within it, as shown in Figure 3. A sealant fluid conduit 24 extends from outside the vessel 2, through top surface 21 of each wall and within the wall, in a bore which leads to sealant egress apertures 38 at the base of each wall, one on one slant face 39 and the other on the other slant face 41. The sealant fluid conduits are connected above ground 17 to a sealant dispensing tank 30, as shown in Figure 1.

Fluid ingress and egress conduits in the form of water ingress pipes 22 and water egress pipes 26 extend from outside of the vessel, through top surface 21 of each of the walls 6, 8, 10 and 12 and extend within each wall. At prescribed intervals the ingress and egress pipes 22 and 26 branch off and connect to water ingress apertures 34 and egress apertures 36 respectively, which are formed into the inner surface of each wall 6, 8, 10 and 12. The water ingress pipes are connected to a water dispensing tank 28 above the surface of the ground 17, and the water egress pipes are connected to a water recovery tank 32 above the surface of the ground, as shown in Figure 1. Thus water can be dispensed from the water dispensing tank 28, down water ingress pipes 22 through water ingress apertures 34 and into the cavity of the vessel 2. The water can then be pumped out of the cavity through water egress apertures 36, water egress pipes 26 and into the water recovery tank 32.

In use, after top plate 14 has been connected to the boundary wall 2, the open vessel is then driven into the ground 17, via mechanical drives or rams attached to the vessel at attachment points 18 and 20. The open face 16 of the vessel 2 is arranged to be lowermost in the ground 17 so that the open cavity formed by the boundary wall 4, top plate 14 and open face 16 is filled with soil when the vessel is inserted. The top surface 19 of the top plate 14 and the top surfaces 21 of the wall plates 6, 8, 10 and 12 protrude from the ground when the vessel 2 is in place in the ground 17.

A suitable method for driving the vessel into the ground such that the top surface 19 of the top plate 14 and the top surfaces 21 of wall plates 6, 8, 10 and 12 protrude from the ground involves attaching a covering plate (not shown), in the form of a downturned tray, which overhangs wall plates 6, 8, 10 and 12. The covering plate, and hence the vessel, is then driven into the ground using a JCB rock breaking or post driving attachment or similar device attached to a tractor. The vessel is driven into the ground until the overhanging portion of the covering member contacts the ground, at which point the insertion operation is ended. The covering plate may then be removed, leaving the vessel protruding slightly from the ground.

Once in position in the ground, it may be necessary to seal the open face 16 of the vessel 2, depending on the soil type. This is achieved by forming a barrier of frozen material which spans the entire open face 16, connecting to the entire circumference of the free end of the boundary wall 2 to effectively form a bottom plate, as shown in Figure 4 as frozen barrier 40.

The frozen barrier 40 is formed by pumping a sealant fluid, such as liquid nitrogen, liquid carbon dioxide or gaseous carbon dioxide, from sealant dispensing tank 30, through sealant fluid conduits 24 and out of sealant egress apertures 38. The sealant, if a cryogen, for example liquid nitrogen, spreads through the soil adjacent to the open face 16 of the vessel 2, freezing any water trapped in the soil, and any other low melting point materials trapped. Continued pumping of the liquid nitrogen or liquid oxygen allows a barrier to form across the entire open face 16, consisting of frozen material, which eventually adheres to the entire circumference of the boundary wall 4 around its lower end, to form a tight seal.

If liquid or gaseous carbon dioxide is used as the sealant fluid, as well as forming a barrier of frozen water, solid carbon dioxide will form as evaporation takes place, creating an additional element to the barrier 40. If there is limited water in the soil the use of carbon dioxide is preferred as the solid carbon dioxide will form the major constituent of the frozen barrier 40.

Once the frozen barrier 40 has sealed the vessel 2, additional sealant fluid can be continuously or periodically added to maintain the seal.

After the vessel 2 has been sealed the soil within the sealed vessel can then be decontaminated. Water from the water dispensing tank 28 is heated and pumped under pressure through water ingress pipes 22 and out of water ingress apertures 34 into the soil in the cavity formed by the sealed vessel. Continued heating and pumping of the water under pressure effects a superheated state of the water within the cavity such that the water is still a liquid at temperatures in excess of 100°C, under pressure of at least 50 bar.

At such high temperatures target pollutants in the soil are dissolved, and if the water is superheated to even higher temperatures certain pollutants will decompose or degrade in the superheated water. Once the water has been superheated and fills the cavity of the vessel it is allowed to leave the cavity by way of water egress apertures 36, being pumped through water egress pipes 26 into the water recovery tank 32. As the water is pumped out of the cavity, more water is pumped in from the water dispensing tank 28 in order to keep the water in the cavity at the required pressure for superheating, and to ensure a continuous flow of water through the vessel 2 in order to remove all the dissolved pollutants and decomposed materials.

Once the required decontamination run is completed, the delivery of sealant fluid is interrupted, and so the frozen barrier is allowed to melt. The vessel 2 is then removed from the ground by way of a lifting device, such as a pulley system or the reverse action of the driving means or ram means, attached to attachment points 18 and 20. During lifting of the vessel from the soil, water is kept pumping through the vessel in order to lubricate the interior of the vessel to prevent soil from sticking to the inner surfaces of the boundary wall 4.

The dissolved pollutants and decomposed materials can then be removed from the water by known methods and disposed of in an environmentally acceptable manner.

The apparatus and method of this preferred embodiment of the present invention provides an in situ soil cleaning apparatus which is easy to use, requires little manpower and resources and involves cheaply available materials.

The use of water and liquid nitrogen or liquid/gaseous carbon dioxide prevents the need to use more expensive bacteria or environmentally harmful solvents for cleaning and the sealed vessel apparatus ensures the soil within is thoroughly decontaminated.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

## Claims

1. An in situ soil decontamination apparatus comprising a vessel having an open face, the vessel thereby defining a cavity, the vessel being arranged in use to be inserted into the ground such that the open face is lowermost, thereby filling the cavity with soil, the vessel including means for providing for the ingress of a decontaminating fluid into the cavity and for the egress of used decontaminating fluid from the cavity, once the vessel is charged with soil, in use.

2. An apparatus as claimed in claim 1, wherein the vessel comprises means for sealing the open face, in use, by forming a physical barrier of frozen material.

3. An apparatus as claimed in claim 2, wherein the means for sealing the open face of the vessel using a frozen material comprises at least one sealing fluid conduit arranged to dispense a sealing fluid to the soil across the open face of the vessel.

4. An apparatus as claimed in claim 3, wherein the sealing fluid comprises liquid nitrogen, liquid carbon dioxide or gaseous carbon dioxide.

5. An apparatus as claimed in any preceding claim, wherein the means for providing for the ingress and egress of decontaminating fluid comprise at least one decontaminating fluid ingress conduit and at least one decontaminating fluid egress conduit, located such that they provide fluid communication between the cavity defined by the vessel, and the outside of the vessel.

6. An apparatus as claimed in claim 5, wherein the or each decontaminating fluid ingress conduit and the or each decontaminating fluid egress conduit is connected to decontaminating fluid dispensing means located outside the vessel.

7. An apparatus as claimed in any preceding claim, wherein the decontaminating fluid is heated before being pumped into the cavity of the vessel.

8. An apparatus as claimed in claims 6 or 7, wherein the decontaminating fluid is water.

9. An apparatus as claimed in claim 8, wherein the water is heated then pumped into the cavity of the vessel, for a sufficient period for the water to attain a superheated state.

10. An apparatus as claimed in claim 9, wherein the water in the vessel is pressurised to at least 20 bar.

11. An apparatus as claimed in claims 9 or 10, wherein the temperature of the water in the vessel is at least 150°C.

12. A method of decontaminating soil in situ, the method comprising the steps of providing a vessel with an open face, inserting the vessel in the ground with the open face lowermost such that he cavity within the vessel is filled with soil, pumping a decontaminating fluid into the soil in the cavity of the vessel in order to dissolve and/or decompose pollutants within the soil and out of the vessel to remove the dissolved and/or decomposed pollutants.

13. A method as claimed in claim 12, wherein before the decontaminating fluid is pumped into the cavity, the open face of the vessel is sealed with a barrier of frozen material.
